# EUROPÄISCHE PATENTSCHRIFT

(11) **EP 1 658 319 B1**
(45) Veröffentlichungstag und Bekanntmachung des Hinweises auf die Patenterteilung: **04.11.2009**
(21) Anmeldenummer: 04764296.2
(22) Anmeldetag: 19.08.2004
(51) Int. Cl.: C08F 255/08

(54) **FORMMASSE**
MOLDING COMPOUND
MATIERE A MOULER

(30) Priorität: 20.08.2003 DE 10338245
(43) Veröffentlichungstag der Anmeldung: 24.05.2006
(73) Patentinhaber: BASF SE, 67056 Ludwigshafen (DE)
(72) Erfinder: TEYSSIE, Dominique, F-78230 Le Pecq (FR); VANCAEYZEELE, Cedric, F-78540 Vernauillet (FR); LASKAR, Judith, F-92250 La Garenne Colombes (FR); FICHET, Odile, F-78300 Poissy (FR); BOILEAU, Sylvie, F-75013 Paris (FR); BLACKBOROW, Richard, F-67000 Strasbourg (FR); RATH, Hans, Peter, 67269 Grünstadt (DE); LANGE, Arno, 67098 Bad Dürkheim (DE); LANG, Gabriele, 68167 Mannheim (DE); MACH, Helmut, 69115 Heidelberg (DE); HILLER, Margit, 97753 Karlstadt (DE)
(74) Vertreter: Reitstötter - Kinzebach
(86) Internationale Anmeldenummer: PCT/EP2004/009312
(87) Internationale Veröffentlichungsnummer: WO 2005/019285

(56) Entgegenhaltungen:
- WO-A-03/020822
- DE-A- 3 115 368
- US-A- 4 939 184
- US-A- 6 005 051

## Beschreibung

Die Erfindung betrifft eine Formmasse, die ein Gemisch interpenetrierender Polymere mit einer ersten Phase eines vernetzten Polyalkylenpolymers und einer zweiten Phase eines (Meth)acrylat- und/oder Vinylaromateneinheiten umfassenden versteifenden Polymers enthält.

Polyisobutenkautschuke zeichnen sich durch besondere Eigenschaften aus, wie geringe Gas- und Feuchtigkeitsdurchlässigkeit, hohe Elastizität und Kälteflexibilität bis zu sehr tiefen Temperaturen. Polyisobutene besitzen eine ausgezeichnete Witterungs- und UV-Beständigkeit. Bestimmte Eigenschaften der Polyisobutenkautschuke, wie Beständigkeit gegen Lösungsmittel oder mechanische Festigkeit, sind allerdings für die meisten Anwendungen nicht zufriedenstellend.

Andererseits weisen Thermoplaste wie Polystyrol oder Polymethylmethacrylat hohe Zugfestigkeiten auf. Es ist wünschenswert, die Eigenschaften der Polyisobutenkautschuke und der Polystyrole zu kombinieren.

Es ist z. B. aus Paul D. R. und Barlow J. W., J. Macromol. Sci., Rev. Macromol. Chem., 18, 109 (1980) und Krause S. in "Polymer Blends" 1, 66, Paul D. R. und Newman S. Hrsg., Academic Press New York (1978) bekannt, dass Polyalkylenpolymere und ataktisches Polystyrol vollkommen inkompatibel sind. Physikalische Gemische dieser Polymere sind heterogen und weisen auf Grund der mangelnden Mischbarkeit die beiden Glasübergangstemperaturen der reinen Komponenten auf.

Man hat versucht, die Polymere auf molekularer Ebene zu mischen und so genannte interpenetrierende Netzwerke zu erhalten, indem man ein vernetztes Polyalkylenpolymer mit Styrol quillt und das Styrol anschließend in situ polymerisiert. Allerdings ist der erreichbare Quellgrad beschränkt und man kann auf diese Weise keine wesentlich höheren Polystyrol-Anteile als 10 % in das Netzwerk einbringen. Außerdem ist die damit verbundene Eigenschaftsmodifizierung nicht stabil und verschwindet bei thermischer Belastung auf Grund von Entmischungserscheinungen.

Die US-A 6,005,051 beschreibt Polyisobuten enthaltende Mehrkomponenten-Polymernetzwerke. Es handelt sich dabei um ein einziges Netzwerk mit mehreren chemisch verschiedenen, kovalent gebundenen Sequenzen.

Der Erfindung liegt die Aufgabe zu Grunde, ein Netzwerk aus einem Polyalkylen in einem versteifenden Polymer bereitzustellen, das (Meth)acrylat- und/oder Vinylaromateneinheiten umfasst, worin die relativen Mengen der beiden Phasen in einem breiten Bereich variiert werden können und die gegenseitige Durchdringung der beiden Phasen ausreichend gut ist und bei der Netzwerkbildung keine Entmischungserscheinungen auftreten.

Erfindungsgemäß wird die Aufgabe gelöst durch eine Formmasse, die ein Gemisch interpenetrierender Polymere mit einer ersten Phase eines vernetzten Isobutenpolymers und einer zweiten Phase eines versteifenden Polymers enthält, das (Meth)acryl- und/oder Vinylaromateneinheiten umfasst, wobei die erste Phase das Reaktionsprodukt eines Isobutenpolymers mit durchschnittlich wenigstens 1,4 funktionellen Gruppen im Molekül und eines Vernetzungsmittels mit durchschnittlich wenigstens zwei funktionellen Gruppen im Molekül, die komplementär funktionell zu den funktionellen Gruppen des Isobutenpolymers sind, umfasst. Die Formmasse kann weitere interpenetrierende Polymere enthalten, wie z. B. polymere Kompatibilisierungsmittel.

Zur Herstellung einer erfindungsgemäßen Formasse geht man z. B. so vor, dass man
(i) die Monomere, die das versteifende Polymer aufbauen, in Gegenwart der ersten Phase radikalisch polymerisiert oder
(ii) das Isobutenpolymer, das Vernetzungsmittel und die Monomere, die das versteifende Polymer aufbauen, mischt und gleichzeitig oder nacheinander die Umsetzung zwischen dem Isobutenpolymer und dem Vernetzungsmittel und die radikalische Polymerisation der Monomere initiiert.

Das Gewichtsverhältnis der ersten zur zweiten Phase in der erfindungsgemäßen Formmasse beträgt im Allgemeinen 5:95 bis 95:5, vorzugsweise 5:95 bis 80:20, insbesondere 30:70 bis 70:30. Bei erfindungsgemäßen Formmassen mit hohem Anteil der Isobutenpolymerphase (z. B. mit einem Gewichtsverhältnis der ersten zur zweiten Phase von 60:40 bis 80:20) bleiben die Barriereeigenschaften des Polyisobutens weitgehend erhalten; der Anteil des versteifenden Polymers liefert die notwendige Reißdehnung. Formmassen mit hohen Gehalte des versteifenden Polymers (z. B. mit einem Gewichtsverhältnis der ersten Phase zur zweiten Phase von 5:95 bis 25:75) sind steif und wenig dehnbar; die Isobutenpolymerphase dient hier der Schlagzähmodifizierung. Bei der Verwendung zur Schlagzähmodifizierung weist die Isobutenpolymerphase zweckmäßigerweise eine geringe Vernetzungsdichte auf. Eine bevorzugte derartige Ausführungsform der Erfindung sind schlagzäh modifizierte Polystyrole oder Polymethylmethacrylate.

Das Isobutenpolymer umfasst (vor seiner Vernetzung) wenigstens 80 Gew.-%, insbesondere wenigstens 90 Gew.-% und besonders bevorzugt wenigstens 95 Gew.-% Isobuteneinheiten. Neben Isobuteneinheiten kann das Isobutenpolymer auch Einheiten von olefinisch ungesättigten Monomeren, welche mit Isobuten unter kationischen Polymerisationsbedingungen copolymerisierbar sind, enthalten. Die Comonomere können statistisch im Polymer verteilt oder als Blöcke angeordnet sein Als copolymerisierbare Monomere kommen vor allem Vinylaromaten wie Styrol, C₁-C₄-Alkylstyrole wie α-Methylstyrol, 3- und 4-Methylstyrol, oder 4-tert-Butylstyrol, sowie Isoolefine mit 5 bis 10 C-Atomen wie 2-Methylbuten-1, 2-Methylpenten-1, 2-Methylhexen-1, 2-Ethylpenten-1, 2-Ethylhexen-1 und 2-Propylhepten-1 in Betracht.

Vorzugsweise weist das Isobutenpolymer vor der Vernetzung ein zahlenmittleres Molekulargewicht von 500 bis 50000, insbesondere 1000 bis 20000, besonders bevorzugt 2000 bis 10000 auf.

Das Isobutenpolymer weist funktionelle Gruppen auf, die mit komplementär funktionellen Gruppen des Vernetzungsmittels unter Ausbildung kovalenter Bindungen reagierenkönnen. Obgleich die funktionellen Gruppen des Isobutenpolymers über die Länge des Polymergerüstes verteilt sein können, und z. B. im Gerüst oder in Seitenketten des Polymers angeordnet sein können, ist es zur Erlangung guter elastischer Eigenschaften bevorzugt, wenn die funktionellen Gruppen des Isobutenpolymers ausschließlich an den Molekülenden des Isobutenpolymers angeordnet sind.

Dem Fachmann sind verschiedene Kombinationen komplementär funktioneller Gruppen bekannt, die unter Ausbildung kovalenter Bindungen miteinander reagieren können. Z. B. sind die funktionellen Gruppen des Isobutenpolymers und des Vernetzungsmittels paarweise ausgewählt unter Isocyanat-reaktiven Gruppen/Isocyanatgruppen oder olefinisch ungesättigten Gruppen/Hydrosilylgruppen. Zu den Isocyanat-reaktiven Gruppen zählen Hydroxylgruppen, Mercaptogruppen, Aminogruppen und Carboxylgruppen, wovon Hydroxylgruppen bevorzugt sind. In bevorzugten Ausführungsformen der erfindungsgemäßen Formmasse umfasst die erste Phase daher das Umsetzungsprodukt eines (i) Isobutenpolymers mit olefinisch ungesättigten Gruppen und eines Vernetzungsmittels mit Hydrosilylgruppen oder (ii) eines Isobutenpolymers mit Hydroxylgruppen und eines Vernetzungsmittels mit Isocyanatgruppen.

Das Isobutenpolymer, geeignete Vernetzungsmittel sowie das versteifende Polymer werden nun anhand bevorzugter Ausführungsformen näher erläutert.

### Isobutenpolymer

Terminal ungesättigte Polyisobutene sind zweckmäßigerweise auch das Ausgangsmaterial für Polyisobutene mit anderen terminalen funktionellen Gruppen, wie Hydroxylgruppen, da die olefinisch ungesättigten Gruppen leicht in andere funktionelle Gruppen, wie Hydroxylgruppen, umgewandelt werden können.

Bei der olefinisch ungesättigten Gruppe kann es sich z. B. um aliphatische ungesättigte Gruppen mit 2 bis 6 Kohlenstoffatomen wie Vinyl, Allyl, Methylvinyl, Methallyl, Propenyl, 2-Methylpropenyl, Butenyl, Pentenyl, Hexenyl; oder cylische ungesättigte Kohlenwasserstoffreste wie Cyclopropenyl, Cyclobutenyl, Cyclopentenyl und Cylohexenyl, handeln. Bevorzugt sind Isobutenpolymere mit terminalen Allyl-, Methallyl-, 2-Methylpropenyl- oder Cyclopentenylgruppen.

Geeignete Isobutenpolymere können nach Verfahren hergestellt werden, die in den US 4,946,889, US 4,327,201, US 5,169,914, EP-A-206 756, EP-A-265 053 sowie umfassend in J.P. Kennedy, B. Ivan, "Designed Polymers by Carbocationic Macromolecular Engineering", Oxford University Press, New York, 1991. beschrieben sind. Die Isobutenpolymere werden durch lebende kationische Polymerisation von Isobuten hergestellt. Das eingesetzte Initiatorsystem umfasst in der Regel eine Lewis-Säure und einen "Initiator", d. h. eine organische Verbindung mit einer leicht substituierbaren Abgangsgruppe, die mit der Lewis-Säure ein Carbokation oder einen kationogenen Komplex bildet. Der Initiator ist in der Regel ein tertiäres Halogenid, ein tertiärer Ester oder Ether oder eine Verbindung mit allyl-ständigem Halogenatom, allyl-ständiger Alkoxy- oder Acyloxygruppe. Das Carbokation oder der kationogene Komplex addieren sukzessive Isobutenmoleküle an das kationische Zentrum, wodurch sich eine wachsende Polymerkette ausbildet, deren Ende durch ein Carbokation oder die Abgangsgruppe des Initiators terminiert ist. Der Initiator kann mono- oder höherfunktionell sein, wobei im letzteren Fall Polymerketten in mehr als eine Richtung wachsen. Entsprechend bezeichnet man ihn als Inifer, Binifer, Trinifer usw.

Isobutenpolymere mit terminaler Doppelbindung können auf verschiedene Weise erhalten werden. Man kann von olefinisch ungesättigten Inifermolekülen ausgehen. Um Polyisobutenmoleküle mit mehr als einer terminalen Doppelbindung pro Molekül zu erhalten, kann man am distalen Kettenende ebenfalls eine olefinische Doppelbindung einführen oder zwei oder mehr lebende Polymerketten koppeln. Beide Möglichkeiten sind nachstehend näher erläutert.

Alternativ geht man von Initiatormolekülen ohne olefinische Doppelbindung aus und terminiert die distalen Kettenenden unter Ausbildung einer ethylenisch ungesättigten Gruppe, wobei man z. B. die reaktiven Kettenenden mit einem Terminierungsreagenz umsetzt, das an die Kettenenden eine ethylenisch ungesättigte Gruppe anfügt, oder geeignet behandelt, um die reaktiven Kettenende in solche Gruppen umzuwandeln.

Geeignete Initiatoren ohne olefinische Doppelbindung lassen sich durch die Formel AYₙ darstellen, worin A für einen n-wertigen aromatischen Rest mit einem bis vier Benzolringen, die nicht anelliert sind, wie Benzol, Biphenyl oder Terphenyl, oder anelliert sind, wie Naphthalin, Anthracen, Phenanthren oder Pyren, oder einen n-wertigen aliphatischen linearen oder verzweigten Rest mit 3 bis 20 Kohlenstoffatomen steht. Y steht für C(R^{a})(R^{b})X, worin R^{a} und R^{b} unabhängig voneinander für Wasserstoff, C₁-C₄-Alkyl, insbesondere Methyl, oder Phenyl stehen und X für Halogen, C₁-C₆-Alkoxy oder C₁-C₆-Acyloxy steht, mit der Maßgabe dass R^{a} für Phenyl steht, wenn A für einen aliphatische Rest steht. n ist eine ganze Zahl von 2 bis 4, insbesondere 2 oder 3. Geeignete Beispiele sind p-Dicumylchlorid, m-Dicumylchlorid oder 1,3,5-Tricumylchlorid.

Als Inifer mit olefinischer Doppelbindung eignet sich z. B. eine Verbindung der Formel I 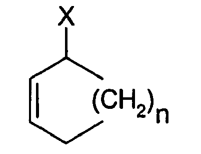 worin
- X: für Halogen, C₁-C₆-Alkoxy oder C₁-C₆-Acyloxy und
- n: für 1, 2 oder 3 steht.

Eine besonders geeignete Verbindung der Formel I ist 3-Chlorcyclopenten.

Als Lewis-Säure kommen kovalente Metallhalogenide und Halbmetallhalogenide, die eine Elektronenpaarlücke aufweisen, in Betracht. Sie sind in der Regel ausgewählt unter Halogen-Verbindungen des Titans, des Zinns, des Aluminiums, des Vanadiums oder des Eisens, sowie den Halogeniden des Bors. Besonders bevorzugte Lewis-Säuren sind Titantetrachlorid, Ethylaluminiumdichlorid und Bortrichlorid und für Molekulargewichte über 5000 insbesondere Titantetrachlorid.

Es hat sich bewährt, die Polymerisation in Gegenwart eines Elektronendonors durchzuführen. Als Donoren sind Pyridin und sterisch gehinderte Pyridin-Derivate sowie insbesondere siliziumorganische Verbindungen bevorzugt. Die Polymerisation wird üblicherweise in einem Lösungsmittel oder Lösungsmittelgemisch durchgeführt, wie aliphatischen Kohlenwasserstoffen, aromatischen Kohlenwasserstoffen sowie halogenierten Kohlenwasserstoffen. Besonders bewährt haben sich Gemische aliphatischer, cycloaliphatischer oder aromatischer Kohlenwasserstoffe mit halogenierten Kohlenwasserstoffen, wie Dichlormethan/n-Hexan, Dichlormethan/Methylcyclohexan, Dichlormethan/Toluol, Chlormethan/n-Hexan und dergleichen.

Um am distalen Kettenende eine olefinische Doppelbindung einzuführen, setzt man das reaktive Kettenende mit einem Terminierungsreagenz um, das an das Kettenende eine olefinisch ungesättigte Gruppe anfügt, oder behandelt das reaktive Kettenende geeignet, um es in eine solche Gruppe umzuwandeln.

In der einfachsten Ausführungsform wird das Kettenende einer Dehydrohalogenierungsreaktion unterworfen, z. B. durch thermische Behandlung, beispielsweise durch Erwärmen auf eine Temperatur von 70 bis 200 °C, oder durch Behandlung mit einer Base. Geeignete Basen sind z. B. Alkalimetallalkoxide, wie Natriummethanolat, Natriumethanolat und Kalium-tert-Butanolat, basisches Aluminiumoxid, Alkalimetallhydroxide, wie Natriumhydroxid, und tertiäre Amine, wie Pyridin oder Tributylamin, vgl. Kennedy et al., Polymer Bulletin 1985, 13, 435-439. Bevorzugt wird Natriumethanolat verwendet.

Alternativ wird das Kettenende durch Zugabe einer Trialkylallylsilanverbindung, z. B. Trimethylallylsilan, terminiert. Die Verwendung der Allylsilane führt zum Abbruch der Polymerisation unter Einführung eines Allylrestes am Polymerkettenende, vgl. nEP 264 214.

In einer weiteren Ausführungsform wird das reaktive Kettenende mit einem konjugierten Dien, wie Butadien (vgl. DE-A 40 25 961) oder einem nicht konjugierten Dien wie 1,9-Decadien oder einem Alkenyloxystyrol wie p-Hexenyloxystyrol (vgl. JP-A-4-288309) umgesetzt.

In einer weiteren Ausführungsform werden durch Zusatz eines Kopplungsmittels zwei oder mehrere lebende Polymerketten gekoppelt. "Kopplung" bedeutet die Ausbildung von chemischen Bindungen zwischen den reaktiven Kettenenden, so dass zwei oder mehrere Polymerketten zu einem Molekül verbunden werden. Die durch Kopplung erhaltenen Moleküle sind symmetrische telechele oder sternförmige Moleküle mit Gruppen des Initiators, z. B. Cyclopentenylgruppen, an den Molekülenden bzw. den Enden der Äste des sternförmigen Moleküls.

Geeignete Kopplungsmittel weisen beispielsweise wenigstens zwei allylständig zur gleichen oder verschiedenen Doppelbindungen angeordnete elektrofuge Abgangsgruppen, z. B. Trialkylsilylgruppen, auf, so dass sich das kationische Zentrum eines reaktiven Kettenendes in einer konzertierten Reaktion unter Abspaltung der Austrittsgruppe und Verschiebung der Doppelbindung anlagern kann. Andere Kopplungsmittel weisen wenigstens ein konjugiertes System auf, an das sich das kationische Zentrum eines reaktiven Kettenendes unter Ausbildung eines stabilisierten Kations elektrophil addieren kann. Durch Abspaltung einer Austrittsgruppe, z. B. eines Protons, entsteht dann unter Rückbildung des konjugierten Systems eine stabile σ-Bindung zu der Polymerkette. Mehrere dieser konjugierten Systeme können durch inerte Spacer miteinander verbunden sein.

Zu den geeigneten Kopplungsmitteln zählen:
(i) Verbindungen, die wenigstens zwei 5-gliedrige Heterocyclen mit einem unter Sauer stoff, Schwefel und Stickstoff ausgewählten Heteroatom aufweisen, z. B. organische Verbindungen, die wenigstens zwei Furanringe aufweisen, wie 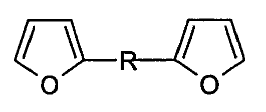 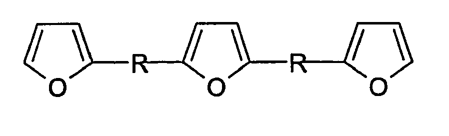 worin R für C₁-C₁₀-Alkylen steht, vorzugsweise Methylen oder 2,2-Propandiyl;
(ii) Verbindungen mit wenigstens zwei allylständigen Trialkylsilylgruppen, wie 1,1-Bis(trialkylsilylmethyl)ethylene, z. B. 1,1-Bis(trimethylsilylmethyl)ethylen, Bis[(trialkylsifyl)-propenyl]benzole z. B. 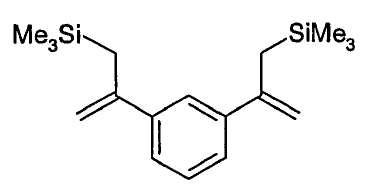 (worin Me für Methyl steht),
(iii) Verbindungen mit wenigstens zwei konjugiert zu jeweils zwei aromatischen Ringen angeordneten Vinylidengruppen, wie Bis-diphenylethylene z. B.

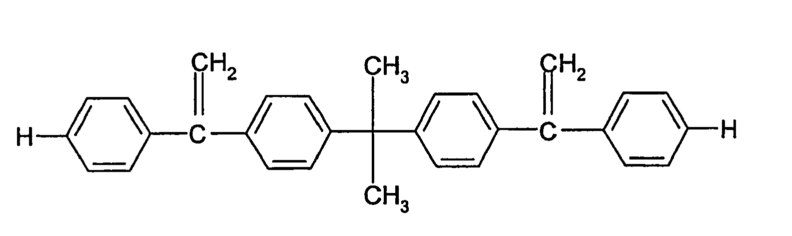

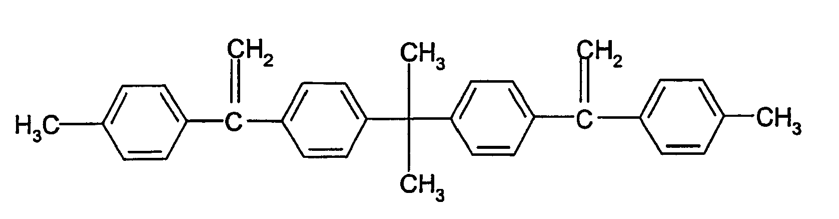

Eine Beschreibung geeigneter Kopplungsmittel findet sich in folgenden Literaturstellen; die Kopplungsreaktion kann in analoger Weise zu den dort beschriebenen Umsetzungen durchgeführt werden: R. Faust, S. Hadjikyriacou, Macromolecules 2000, 33, 730-733; R. Faust, S. Hadjikyriacou, Macromolecules 1999, 32, 6393-6399; R. Faust, S. Hadjikyriacou, Polym. Bull. 1999, 43, 121-128; R. Faust, Y. Bae, Macromolecules 1997, 30, 198; R. Faust, Y. Bae, Macromolecules 1998, 31, 2480; R. Storey, Maggio, Polymer Preprints 1998, 39, 327-328; WO99/24480; US 5,690,861 und US 5,981,785.

Die Kopplung erfolgt in der Regel in Gegenwart einer Lewis-Säure, wobei sich solche Lewis-Säuren eignen, die auch zur Durchführung der eigentlichen Polymerisationsreaktion verwendbar sind. Zur Durchführung der Kopplungsreaktion sind außerdem auch die gleichen Lösungsmittel und Temperaturen geeignet, wie man sie zur Durchführung der eigentlichen Polymerisationsreaktion einsetzt. Zweckmäßigerweise kann man die Kopplung daher als Eintopfreaktion im Anschluss an die Polymerisationsreaktion im gleichen Lösungsmittel in Gegenwart der zur Polymerisation eingesetzten Lewis-Säure durchführen.

### Hydroxyl-terminierte Isobutenpolymere

Isobutenpolymere mit terminalen Hydroxylgruppen können aus Isobutenpolymeren mit terminaler Doppelbindung durch Hydroborierung und anschließende Oxidation erhalten werden. Zu den geeigneten Hydroborierungsagentien zählen vor allem Boran (BH₃) selbst oder Diisoamylboran oder 9-Borabicyclo-[3.3.1]nonan (9-BBN). Dem Fachmann ist geläufig, dass Boran hauptsächlich in Form seines Dimeren, dem Diboran (B₂H₆) vorkommt. Der Begriff "Boran" soll das Dimere und die höheren Oligomeren des Borans umfassen.

Zweckmäßigerweise wird Boran in situ durch Umsetzung geeigneter Vorläufer, insbesondere von Alkalimetall- oder Erdalkalimetallsalzen des BH₄-Anions mit Bortrihalogeniden, erzeugt. Im Allgemeinen verwendet man Natriumborhydrid und Bortrifluorid bzw. dessen Etherat, da es sich hierbei um gut zugängliche und lagerfähige Substanzen handelt. Vorzugsweise handelt es sich bei der Hydroborierungsagens daher um eine Kombination von Natriumborhydrid und Bortrifluorid oder Bortrifluorid-Etherat.

Üblicherweise führt man die Hydroborierung in einem Lösungsmittel durch. Geeignete Lösungsmittel für die Hydroborierung sind beispielsweise acyclische Ether wie Diethylether, Methyl-tert-butylether, Dimethoxyethan, Diethylenglykoldimethylether, Triethylenglykoldimethylether, cyclische Ether wie Tetrahydrofuran oder Dioxan sowie Kohlenwasserstoffe wie Hexan oder Toluol oder Gemische davon.

Üblicherweise werden die gebildeten Polyisobutenylborane nicht isoliert. Bei Behandlung der primären Hydroborierungsprodukte mit einem Oxidationsmittel, insbesondere alkalischem Wasserstoffperoxid, erhält man einen Alkohol, der formal dem Anti-Markovnikov-Hydratisierungsprodukt des ungesättigten Isobutenpolymers entspricht.

### Vernetzungsmittel mit Hydrosilylgruppen

Dieses Vernetzungsmittel ist eine Verbindung mit wenigstens zwei, vorzugsweise wenigstens drei, SiH-Gruppen (Hydrosilylgruppen) im Molekül. Zwei Wasserstoffatome, die an ein Siliziumatom gebunden sind, gelten als zwei Hydrosilylgruppen. Vorzugsweise verwendet man ein Polysiloxan, das z. B. die folgenden linearen oder cyclischen Strukturen haben kann: 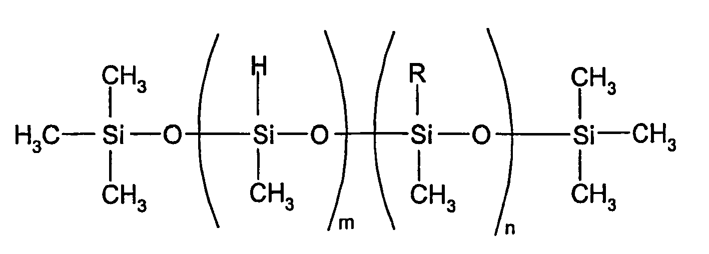 worin m und n ganze Zahlen sind, für die gilt: 10 ≤ (m+n) ≤ 50, 2 ≤m, und 0 ≤ n; und R für eine C₂-C₂₀-Kohlenwasserstoffrest steht, der eine oder mehrere Phenylgruppen enthalten kann; 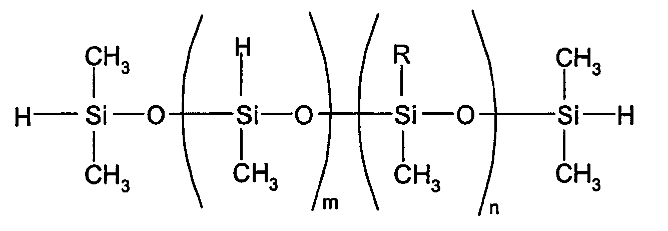 worin m und n ganze Zahlen sind, für die gilt: 10 ≤ (m+n) ≤ 50, m ≤ 0, und n ≤ 0; und R für eine C₂-C₂₀-Kohlenwasserstoffrest steht, der eine oder mehrere Phenylgruppen enthalten kann; 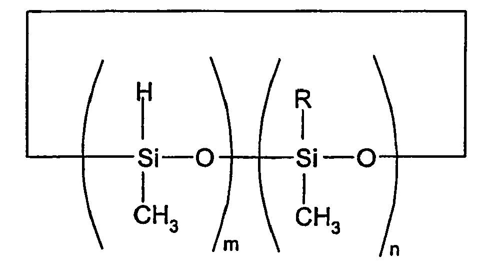 worin m und n ganze Zahlen sind, für die gilt: 10 ≤ (m+n) ≤ 20, 2 ≤ m ≤ 20, und 0≤ n ≤ 18; und R für eine C₂-C₂₀-Kohlenwasserstoffrest steht, der eine oder mehrere Phenylgruppen enthalten kann;

Als Vernetzungsmittel kann man auch eine organische Verbindung mit wenigstens zwei Hydrosilylgruppen im Molekül verwenden, z. B. der Formel

QXₐ

worin Q für einen ein- bis vierwertigen organischen Rest mit 2 bis 2000 Kohlenstoffatomen steht und X für eine Gruppe steht, die wenigstens eine Hydrosilylgruppe umfasst.

X steht beispielweise für lineare oder cyclische Polysiloxanreste der folgenden Formeln: 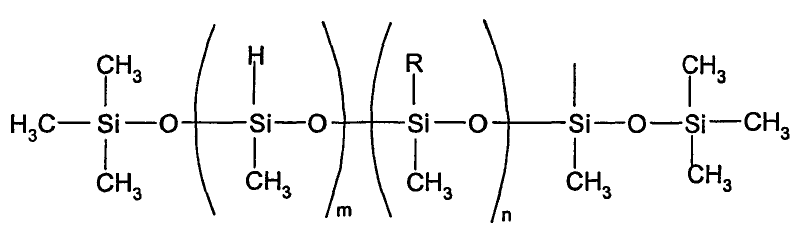 worin m und n ganze Zahlen sind, für die gilt: 1 ≤ (m+n) ≤ 50, 1 ≤ m, und n ≤0; und R für eine C₂-C₂₀-Kohlenwasserstoffrest steht, der eine oder mehrere Phenylgruppen enthalten kann; 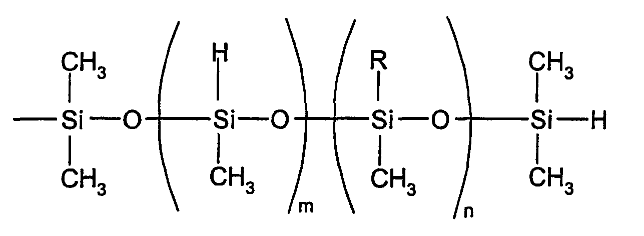 worin m und n ganze Zahlen sind, für die gilt: 0 ≤ (m+n) ≤ 50, m ≤ 0, und n ≤ 0; und R für eine C₂-C₂₀-Kohlenwasserstoffrest steht, der eine oder mehrere Phenylgruppen enthalten kann; 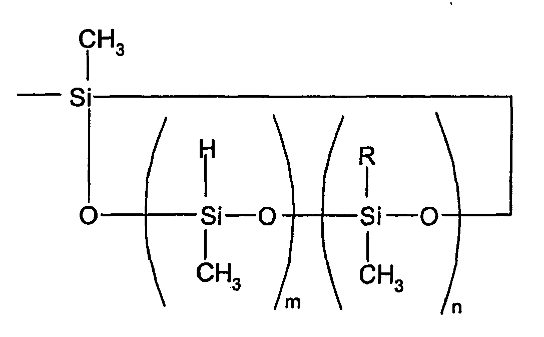 worin m und n ganze Zahlen sind, für die gilt: 1 ≤ (m+n) ≤ 19, 1 ≤ m: ≤ 19, und 0 ≤ n ≤ 18; und R für eine C₂-C₂₀-Kohlenwasserstoffrest steht, der eine oder mehrere Phenylgruppen enthalten kann.

X kann außerdem für Gruppen stehen, die wenigstens eine Hydrosilylgruppe umfassen und nicht den Polysiloxanen zuzurechnen sind, wie:

-Si(H)ₙ(Alk)₃₋ₙ

mit Alk = Methyl, Ethyl, Propyl, Butyl, Cyclohexyl oder Phenyl, und n = 1 bis 3;

-Si(CH₃)₂Si(CH₃)₂H,

-Si(CH₃)₂CH₂CH₂Si(CH₃)₂H,

-si(CH₃)₂Si(CH₃)H₂,

-Si(CH₃)₂-C₆H₄-Si(CH₃)₂H,

-Si(CH₃)₂NHSi(CH₃)₂H,

-Si(CH₃)₂N[Si(CH₃)₂H]₂,

-Si(CH₃)₂OC(CH₃)=NSi(CH₃)₂H und

-Si(CH₃)₂NC(CH₃)=NSi(CH₃)₂H.

Spezifische Beispiele geeigneter Vernetzungsmittel sind Dodecyloxytetra(methylhydrosiloxy) dodecan, Dodecyloxytetra(dimethylsiloxy)-tetra(methylhydrosiloxy)-dodecan, Octyloxytetra(dimethylsiloxy)-tetra(methylhydrosiloxy)-octan, para-Bis(dimethylsilyl)-benzol, Bis(dimethylsilyl)-ethan, Bis(dimethylsilyl)-butan, 1,1,3,3-Tetramethyldisiloxan, 1,1,1,3,5,7,7,7-Octamethyltetrasiloxan, 1,1,3,3-Tetraethyldisiloxan, 1,1,1,3,5,7,7,7-Octaethyltetrasiloxan, 1,1,3,3-Tetraphenyldisiloxan, 1,1,1,3,5,7,7,7-Octaphenyltetrasiloxan, 1,3,5-Trimethylcyclotrisiloxan, 1,3,5,7-Tetramethylcyclotetrasiloxan, 1,3,5,5,7,7-Hexamethylcyclotetrasiloxan, 1,3,5,7,7-Pentamethylcyclotetrasiloxan, 1,3,5,7-Tetramethyl-5,7-diphenyl-tetrasiloxan, 1,3-Dimethyl-5,5,7,7-tetraphenyltetrasiloxan oder Umsetzungsprodukte davon mit Di- oder Polyolefinen mit bis zu 2000 Kohlenstoffatomen, mit der Maßgabe, dass die Umsetzungsprodukte über wenigstens zwei Hydrosilylgruppen verfügen.

Üblicherweise wird bei der Vernetzung ein Hydrosilylierungskatalysator mitverwendet. Es kann sich um einen beliebigen geeigneten Katalysator handeln, insbesondere solche auf Edelmetallbasis, vorzugsweise Platinbasis. Hierzu zählen Chloroplatinsäure, elementares Platin, Platin auf einem festen Träger wie Tonerde, Kieselsäure oder Aktivkohle, Platin-Vinylsiloxan-Komplexe wie Ptₙ(ViMe₂SiOSiMe₂Vi)ₙ und Pt[(MeViSiO)₄]ₘ, Platin-Phosphin-Komplexe wie Pt(PPh₃)₄ und Pt(PBu₃)₄, Platin-Phosphit-Komplexe wie Pt[P(OPh)₃]₄ und Pt[P(OBu)₃]₄ (in den Formeln steht Me für Methyl, Bu für Butyl, Vi für Vinyl, Ph für Phenyl und n und m für ganze Zahlen), Platinacetylacetonat. Andere Hydrosilylierungskatalysatoren sind RhCl(PPh₃)₃, RhCl₃, Rh/Al₂O₃, RuCl₃, IrCl₃, FeCl₃, AlCl₃, PdCl₂, NiCl₂ und TiCl₄. Der Katalysator wird üblicherweise in einer Menge von 10⁻¹ bis 10⁻⁸ mol, vorzugsweise 10⁻² bis 10⁻⁶ mol, bezogen auf ein mol olefinisch ungesättigter Gruppe im Isobutenpolymer, verwendet.

### Vernetzungsmittel mit Isocyanatgruppen

In dieser Ausführungsform handelt es sich bei dem Vernetzungsmittel um ein di- oder höherfunktionelles Isocyanat, das vorzugsweise unter Diisocyanaten, den Biurethen und Cyanuraten von Diisocyanaten sowie den Addukten von Diisocyanaten an Polyole ausgewählt ist. Geeignete Diisocyanate weisen in der Regel 4 bis 22 C-Atome auf. Die Diisocyanate sind üblicherweise ausgewählt unter aliphatischen, cyclo-aliphatischen und aromatischen Diisocyanaten, z. B. 1,4-Diisocyanatobutan, 1,6-Diisocyanatohexan, 1,6-Diisocyanato-2,2,4-trimethylhexan, 1,6-Diisocyanato-2,4,4-trimethylhexan, 1,2-, 1,3- und 1,4-Diisocyanatocyclohexan, 2,4- und 2,6-Diisocyanato-1-methylcyclohexan, 4,4'-Bis(isocyanatocyclohexyl)methan, Isophorondiisocyanat (=1-Isocyanato-3,3,5-trimethyl-5-isocyanatomethylcyclohexan), 2,4- und 2,6-Toluylendiisocyanat, Tetramethylen-p-xylylendiisocyanat (= 1,4-Bis(2-isocyanatoprop-2-yl)benzol), 4,4'-Diisocyanatodiphenylmethan, vorzugsweise 1,6-Diisocyanatohexan und Isophorondüsocyanat, und Mischungen davon. Bevorzugte Verbindungen umfassen die Cyanurate und Biurete aliphatischer Diisocyanate, insbesondere die Cyanurate. Besonders bevorzugte Verbindungen sind das Isocyanurat und das Biuret des Isophorondiisocyanats und das Isocyanurat und das Biuret des 1,6-Diisocyanatohexans. Beispiele für Addukte von Diisocyanaten an Polyole sind die Addukte der oben genannten Diisocyanate an Glycerin, Trimethylolethan und Trimethylolpropan, z. B. das Addukt von Toluylendiisocyanaten an Trimethylolpropan, oder die Addukte von 1,6-Diisocyanatohexan oder Isophorondiisocyanat an Trimethylpropan und/oder Glycerin.

Zur Beschleunigung der Umsetzung zwischen den Isocyanat-reaktiven Gruppen des Isobutenpolymers und den Isocyanatgruppen des Vernetzungsmittels können bekannte Katalysatoren, wie z. B. Dibutylzinndilaurat, Zinn-(II)-octoat, 1,4-Diazabicyclo[2.2.2]-octan oder Amine, wie Triethylamin, eingesetzt werden. Diese werden typischerweise in einer Menge von 10⁻⁵ bis 10⁻² g, bezogen auf des Gewicht des Vernetzungsmittels, eingesetzt.

Die Vernetzungsdichte kann durch Variation der Funktionalität des Polyisocyanats, des molaren Verhältnisses des Polyisocyanats zum Hydroxyl-terminierten Isobutenpolymer, oder durch Mitverwendung monofunktioneller, gegenüber Isocyanatgruppen reaktiver Verbindungen, wie einwertiger Alkohole, z. B. Ethylhexanol oder Propylheptanol, gesteuert werden.

### Versteifendes Polymer

Die zweite Phase der erfindungsgemäßen Formmasse wird von einem Polymer gebildet, das durch radikalische Polymerisation von (Meth)acrylmonomeren oder vinylaromatischen Monomere erhältlich ist. Beispiele geeigneter Monomere sind Styrol, kernalkylierte Styrole mit bevorzugt C₁-C₄-Alkylresten wie α-Methylstyrol, p-Methylstyrol, Acrylnitril, Methacrylnitril, Acrylamid bzw. Methacrylamid, Alkylacrylate und -methacrylate mit 1 bis 4 C-Atomen im Alkylrest wie insbesondere Methylmethacrylat. Verwendet werden vorzugsweise Monomere und Monomerengemische, die ein Polymer bzw. Copolymer mit einer Glasübergangstemperatur von mehr als +20 °C und bevorzugt mehr als +50 °C ergeben.

Um funktionelle Polymere mit bestimmten Eigenschaften herzustellen, können die Monomere der zweiten Phase auch ionische Monomere umfassen. In Betracht kommen z. B. Monomere mit anionischen Seitengruppen wie (Meth)acrylsäure, Fumarsäure, Maleinsäure, Itaconsäure oder bevorzugt Vinylsulfonsäure oder Styrolsulfonsäure, worin die sauren Gruppen ganz oder teilweise neutralisiert sein können und z. B. in Form von Alkalimetallsalzen wie dem Natriumsalz vorliegen können; oder Monomere mit kationischen Seitengruppen wie (2-(Acryloyloxy)ethyl)trimethylammoniumchlorid.

Das versteifende Polymer kann daneben von (Meth)acrylmonomeren oder vinylaromatischen Monomeren verschiedene Monomere enthalten. Die (Meth)acrylmonomere oder vinylaromatischen Monomere machen im Allgemeinen wenigstens 20 Gew.-%, vorzugsweise wenigstens 50 Gew.-%, insbesondere wenigstens 70 Gew.-%, der konstituierenden Monomere aus, z. B. 20 bis 40 Gew.-% für Werkstoffe, deren Eigenschaften überwiegend denen der Polyisobutene ähneln, deren mechanische Eigenschaften aber durch die Anwesenheit des versteifenden Polymers verbessert sind, oder 70 bis 90 Gew.-% für schlagzähmodifizierte Werkstoffe. Besonders bevorzugt ist, als Monomer Gemische zu verwenden, die wenigstens 50 Gew.-% Styrol oder Methylmethacrylat enthalten.

Mit Vorteil werden vernetzende Monomere mitverwendet. Hierzu zählen insbesondere Verbindungen, die wenigstens zwei nicht-konjugierte, ethylenisch ungesättigte Doppelbindungen aufweisen, z. B. die Diester zweiwertiger Alkohole mit αβ-monoethylenisch ungesättigten C₃-C₁₀-Monocarbonsäuren. Beispiele für derartige Verbindungen sind Alkylenglykoldiacrylate und -dimethacrylate, wie Ethylenglykoldiacrylat, 1,3-Butylenglykoldiacrylat, 1,4-Butylenglykoldiacrylat, Propylenglykoldiacrylat, Divinylbenzol, Vinylmethacrylat, Vinylacrylat, Allylmethacrylat, Allylacrylat, Diallylmaleat, Diallylfumarat, Methylenbisacrylamid, Cyclopentadienylacrylat, Tricyclodecenyl(meth)acrylat, N,N'-Divinylimidazolin-2-on oder Triallylcyanurat. Die vernetzenden Monomere werden üblicherweise in einer Menge von 0,1 bis 30 Gew.-%, vorzugsweise 1 bis 20 Gew.-%, insbesondere 2 bis 15 Gew.-%, bezogen auf die Gesamtmenge der das versteifende Polymer konstituierenden Monomere, verwendet.

Zur Herstellung einer erfindungsgemäßen Formasse werden die das versteifende Polymer konstituierenden Monomere radikalisch polymerisiert, entweder in Gegenwart eines zuvor hergestellten Netzwerks aus einem vernetzten Isobutenpolymer oder unter gleichzeitiger Vernetzung des Isobutenpolymers.

Die Polymerisation wird mittels eines radikalbildenden Initiators oder, alternativ, durch energiereiche Strahlung wie UV-Strahlung oder Elektronenstrahlung initiiert. Der Initiator wird üblicherweise in einer Menge von 0,1 bis 2 Gew.-%, bezogen auf die Gesamtmenge der Monomere des versteifenden Polymers, verwendet. Geeignete Initiatoren aus der Klasse der Peroxidverbindungen, Azoverbindungen oder Azoperoxidverbindungen sind dem Fachmann bekannt und im Handel erhältlich.

Als Beispiele geeigneter Initiatoren lassen sich Di-tert-butyloxypivalat, Didecanoylperoxid, Dilauroylperoxid, Diacetylperoxid, Di-tert-butylperoctoat, Dibenzoylperoxid, tert-Butylperacetat, tert-Butylperoxyisopropylcarbonat, tert-Butylperbenzoat, Di-tert-butylperoxid, 1,1-Bis-(tert-butylperoxy)-3,3,5-trimethylcyclohexan, 2,5-Dimethyl2,5-bis-(benzoylperoxy)-hexan, 1,4-Di-(tert-butylperoxycarbonyl)-cyclohexan, 1,1-Bis-(tert-butylperoxy)-cyclohexan, Di-tert-butyldiperoxyazelat, oder Di-tert-butylperoxycarbonat anführen. Davon sind Dilauroylperoxid, Dibenzoylperoxid, ter-Butylperbenzoat und tert-Butylperoxyisopropylcarbonat bevorzugt.

Die Polymerisation erfolgt üblicherweise bei erhöhter Temperatur, wobei ein Temperaturbereich von 40 bis 180 °C, vorzugsweise 60 bis 120 °C, geeignet ist. Mit Vorteil kann die Temperatur auch stufenweise erhöht werden. Wird die Polymerisation durch energiereiche Strahlung initiiert, sind auch niedrigere Temperaturen geeignet, z. B. Umgebungstemperatur.

Die Polymerisation erfolgt üblicherweise als Substanzpolymerisation. Lösungsmittel können gegebenenfalls mitverwendet werden. Hierzu sind gesättigte oder ungesättigte aliphatische Kohlenwasserstoffe wie Hexan, Pentan, Isopentan, Cyclohexan, Methylcyclohexan, Diisobuten, Triisobuten, Tetraisobuten, Pentaisobuten, Hexaisobuten oder Gemische davon, aromatische Kohlenwasserstoffe wie Benzol, Toluol, Xylol, oder Gemische davon geeignet. Man kann die Polymerisation auch in Gegenwart eines Weichmachers oder eines Weichmachergemisches durchführen, wie den Phthalaten und Adipaten aliphatischer oder aromatischer Alkohole, z. B. Di-(2-ethylhexyl)adipat, Di-(2-ethylhexyl)phthalat, Diisononyladipat oder Diisonylphthalat. Wenn die funktionellen Gruppen des Isobutenpolymers und des Vernetzungsmittels des gewählten Vemetzungssystem wasserunempfindlich sind, kann die Polymerisation unter gleichzeitiger Vernetzung auch als wässrige Suspensionspolymerisation durchgeführt werden.

Führt man die Polymerisation in Gegenwart des zuvor vernetzten Isobutenpolymers durch, kann das kautschukartige Isobutennetzwerk entweder in der gewünschten Gestalt des fertigen Formteils oder in zerkleinerter Form, z. B. als Granulat vorliegen. Man lässt das kautschukartige Isobutennetzwerk mit den Monomeren, die das versteifende Polymer der zweiten Phase bilden, ausreichend äquilibrieren bzw. quellen. Zur besseren Quellung kann die Mitverwendung eines der genannten Lösungsmittel vorteilhaft sein. Falls gewünscht, können Hilfsstoffe in diesem Stadium des Herstellungsverfahrens eingearbeitet werden. Nach der Äquilibration bzw. Quellen initiiert man die Polymerisation in geeigneter Weise, z. B. durch Temperaturerhöhung.

Die Verwendung des zuvor vernetzten Isobutenpolymers in zerkleinerter, z. B. granulierter Form ist besonders dann zweckmäßig, wenn das versteifende Polymer thermoplastisch ist, d.h. unvernetzt oder gering vernetzt ist. In diesem Fall führt das Polyisobuten-Netzwerk zu einer Schlagzähmodifizierung des Thermoplasten.

Alternativ geht man so vor, dass man das Isobutenpolymer, das Vernetzungsmittel, soweit erforderlich, Vernetzungskatalysatoren und Hilfsstoffe, und die Monomere, die das versteifende Polymer aufbauen, mischt und gleichzeitig oder nacheinander die Umsetzung zwischen dem Isobutenpolymer und dem Vernetzungsmittel und die radikalische Polymerisation der Monomere initiiert. Das Gemisch der Komponenten kann man geeigneterweise in eine Gussform einfüllen und aushärten, z. B. durch Temperaturerhöhung. Die sequentielle Initiierung der Umsetzung zwischen dem Isobutenpolymer und dem Vernetzungsmittel und der radikalische Polymerisation der Monomere kann z. B. durch stufenweise Temperaturerhöhung erreicht werden.

Die erfindungsgemäßen Formmassen können daneben übliche Hilfsstoffe enthalten, wie Füllstoffe, Verdünner oder Stabilisatoren.

Um die Verträglichkeit der ersten Phase mit der zweiten Phase zu verbessern, kann die Mitverwendung von polymeren Kompatibilisierungsmitteln wünschenswert sein. Als solche eignen sich vor allem Polymere mit Polyether-, Polyester- oder Polyamideinheiten. Geeignete polymere Kompatibilisierungsmittel sind z. B. Polyethylenglycole. Die polymeren Kompatibilisierungsmittel sind vorzugsweise vernetzt. Das polymere Kompatibilisierungsmittel kann auf diese Weise ein die erste Phase penetrierendes Netzwerk bilden. Die Vernetzung des polymeren Kompatibilisierungsmittels und des Isobutenpolymers kann gleichzeitig erfolgen, wenn das polymere Kompatibilisierungsmittel und das Isobutenpolymer über geeignete funktionelle Gruppen verfügen, die mit dem gleichen Vernetzungsmittel reagieren. So kann man z. B. ein Hydroxy-terminiertes Polyisobuten und ein Polyethylenglycol mischen und gemeinsam mit einem di- oder höherfunktionelles Isocyanat vernetzen.

Geeignete Füllstoffe sind z. B. Kieselsäure, kolloidale Kieselsäure, Calciumcarbonat, Ruß, Titandioxid, Glimmer und dergleichen.

Geeignete Verdünner sind z. B. Polybuten, flüssiges Polybutadien, hydriertes Polybutadien, Paraffinöl, Naphthenate, ataktisches Polypropylen, Dialkylphthalate, Reaktivverdünner, z. B. Alkohole und Oligoisobutene.

Geeignete Stabilisatoren sind z. B. 2-Benzothiazolylsulfid, Benzothiazol, Thiazol, Dimethylacetylendicarboxylat, Diethylacetylendicarboxylat, BHT, Butylhydroxyanisol, Vitamin E.

Die erfindungsgemäße Formmasse kann in beliebiger geeigneter Form hergestellt werden, z. B. als Folie oder Membran, oder als Schüttgut, wie Kugeln, Pellets, Zylinder, Pulver und dergleichen.

Aufgrund ihrer hervorragend niedrigen Gas- und Wasserdampfdurchlässigkeit sowie ihrer mechanischen Stabilität unter anderem gegenüber Rissbildung und der Penetration durch spitze wie stumpfe Gegenstände ist die erfindungsgemäße Formmasse besonders geeignet zur Herstellung von Werkstoffen oder Formteilen zur Bedachung von Gebäuden. Sie kann zu diesem Zweck in Folienbahnen oder Platten bereitgestellt werden. Außerdem ist die Formmasse unter anderem brauchbar für Kaminabdichtungen; als schlagzäh modifiziertes Polymethylmethacrylat zur Herstellung von Scheiben für den Automobilbau oder Treib- und Gewächshäuser, Wintergärten; oder als schlagzäh modifiziertes Polystyrol zur Herstellung von Formteilen durch Extrusions-, Tiefzieh-, Blasform- oder Spritzgussanwendungen.

Formteile aus der erfindungsgemäßen Formasse lassen sich leicht miteinander verbinden, wobei die Gas- und Wasserdampfdurchlässigkeit und die mechanischen Eigenschaften der Nahtstelle weitgehend denen der Formasse entsprechen, wenn man
(i) ein härtbares Gemisch aus einem oben definierten Isobutenpolymer und einem oben definierten Vernetzungsmittel herstellt,
(ii) das Gemisch mit den zu verbindenden Oberflächen der Formteile in Kontakt bringt, und
(iii) das Gemisch aushärten lässt.

Das härtbare Gemisch enthält vorzugsweise ein Lösungsmittel und/oder Reaktiwerdünner, um eine geeignete Viskosität zum leichteren Auftrag in geringer Schichtdicke einzustellen. Hierzu sind aliphatische Kohlenwasserstoffe wie Hexan, Pentan, Isopentan, Cyclohexan oder Methylcyclohexan, aromatische Kohlenwasserstoffe wie Benzol, Toluol oder Xylol, sowie halogenierte Kohlenwasserstoffe wie Dichlormethan oder Dichlorethan, Ether wie Tetrahydrofuran, Diethylether, und andere Verdünner wie z. B. niedermolekulare Isobutenoligomere z. B. mit einem zahlenmittleren Molekulargewicht von 112 bis 1000, oder Gemische davon geeignet. Vor dem Auftrag kann man das Gemisch vorreagieren lassen, jedoch nicht bis zur völligen Aushärtung.

Zum Verkleben kann man die Formteile, z. B. Bahnen, an ihren Kanten auf Stoß oder beabstandet zueinander anlegen und das härtbare Gemisch auf die aneinander grenzenden bzw. benachbarten Oberflächen und/oder den Spalt zwischen den Oberflächen bringen. Man kann das härtbare Gemisch auch auf die zu verbindende Oberfläche eines Formteils, z. B. den Kantenbereich einer Folienbahn, aufbringen und dann das zweite Formteil in Kontakt mit der behandelten Oberfläche bringen, z. B. eine zweite Folienbahn an den Kanten überlappend anlegen. Die Aushärtung erfolgt in den meisten Fällen bereits bei Umgebungstemperatur ausreichend schnell, gewünschtenfalls kann erhöhte Temperatur angewendet werden.

Die Erfindung wird durch die beigefügten Figuren und die nachfolgenden Beispiele näher veranschaulicht (Im Folgenden ist Polyisobuten bisweilen als PIB abgekürzt).

Fig. 1 zeigt den Verlustfaktor (tan δ) in Abhängigkeit von der Temperatur für interpenetrierende Netzwerke mit verschiedenen Gewichtsanteilen PIB/Polystyrol-Phase.

Fig. 2 zeigt den Speichermodul in Abhängigkeit von der Temperatur für interpenetrierende Netzwerke mit verschiedenen Gewichtsanteilen PIB/Polystyrol-Phase.

Fig. 3 zeigt den Verlustfaktor (tan δ) und den Speichermodul in Abhängigkeit von der Temperatur für ein sequentielles interpenetrierendes Netzwerk mit einem Gewichtsanteil PIB/Polystyrol-Phase von 70/30.

Fig. 4 zeigt den Verlustfaktor (tan δ) in Abhängigkeit von der Temperatur für eine einstückige Folie aus einem interpenetrierenden PIB/Polystyrol-Netzwerk, eine Folie mit Klebenaht und ein einstückiges PIB-Netzwerk.

Fig. 5 zeigt den Speichermodul in Abhängigkeit von der Temperatur für eine einstückige Folie aus einem interpenetrierenden PIB/Polystyrol-Netzwerk, eine Folie mit Klebenaht und ein einstückiges PIB-Netzwerk.

### Beispiel 1

1 g α,ω-Dihydroxypolyisobuten (Mn 4200) wurde unter einer Argon-Schutzatmosphäre in 1,1 ml Styrol und 120 µl Divinylbenzol (11 Gew.-%, bezogen auf Styrol) gelöst. Man versetzte das Gemisch mit 5 mg Benzoylperoxid (0,5 Gew.-%, bezogen auf Styrol), 110 mg Desmodur® N3300 (Polyisocyanat von Bayer mit durchschnittlich 21,8 g Isocyanatgruppen /100g Produkt; 11 Gew.-%, bezogen auf Polyisobuten) und 28 µl Dibutylzinndilaurat und mischte gründlich. Das Gemisch wurde in eine Gussform überführt, die aus zwei Glasplatten bestand, die von einer Teflon-Dichtung mit einer Dicke von 0,5 mm auseinander gehalten wurden. Die Gussform wurde mit Kammern zusammengehalten und in einen Ofen mit Temperatursteuerung gestellt. Die Temperatur wurde 6 h auf 60 °C, dann 2 h auf 80 °C und schließlich 2 h bei 100°C gehalten. Man entnahm die Gussform aus dem Ofen, ließ abkühlen und entformte die Probe.

Man erhielt eine durchscheinende, flexible Folie mit einer Glasübergangstemperatur (Tg) von -71 °C bzw. +80 °C gemäß DSC-Bestimmung (zum Vergleich weist reines Polystyrol mit 11 Gew.-% Divinylbenzol eine Tg von +108 °C, in Abwesenheit von Styrol vernetztes α,ω-Dihydroxypolyisobuten eine Tg von -67 °C auf). Das erhaltene interpenetrierende Netzwerk weist ein Gewichtsverhältnis von PIB/Polystyrol-Phase von etwa 50/50 auf.

### Beispiel 2

Beispiel 1 wurde wiederholt, wobei jedoch die Mengen so gewählt wurden, dass man ein interpenetrierendes Netzwerk mit einem Gewichtsanteil PIB/Polystyrol-Phase von 30/70 erhielt. Man erhielt eine durchscheinende flexible Folie mit Glasübergangstemperaturen von -65 °C und +90 °C.

Auf gleiche Weise konnten interpenetrierende Netzwerk mit Gewichtsverhältnissen von PIB/Polystyrol-Phase von 90/10 bis 10/90 hergestellt werden.

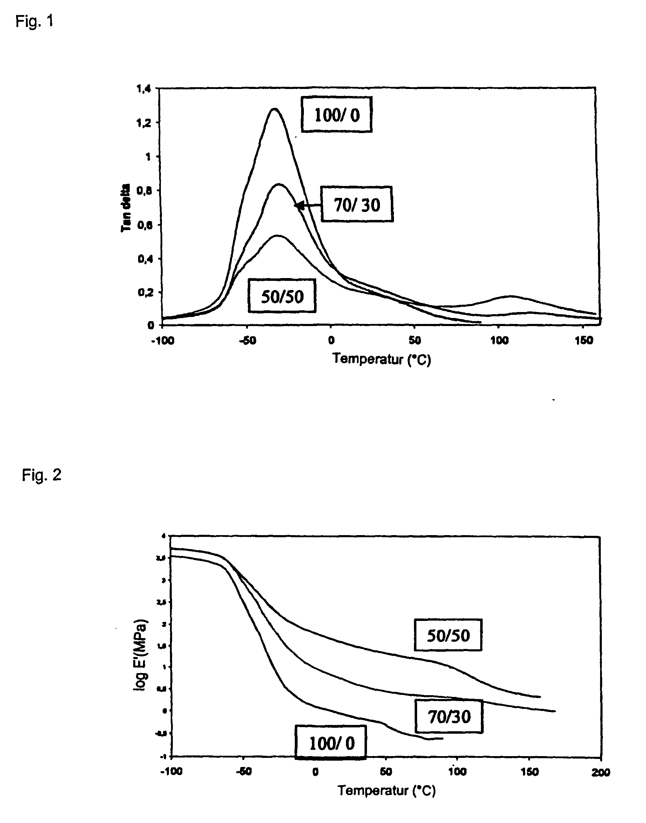

Die mechanischen Eigenschaften verschiedener interpenetrierender Netzwerke wurden durch Dynamisch-mechanische Analyse bestimmt. Die Ergebnisse sind in der nachstehenden Tabelle und in den Fig. 1 und 2 zusammengefasst. Der Speichermodul (E') und der Verlustmodul (E") kennzeichnen die Energiebeträge, die durch elastisches Verhalten gespeichert bzw. durch molekulare Reibungsvorgänge in Wärme umgewandelt werden. Das Material wird anhand des Verlustfaktors tan δ (= E"/E') gekennzeichnet. Je höher tan δ, umso besser ist das Material zur Dämpfung von Schwingungen in der Lage. Man sieht, dass der Speichermodul mit steigendem Polystyrolgehalt zunimmt.

### Beispiel 3

Man mischte 2 g α,ω-Dihydroxypolyisobuten (Mn 4200), 220 mg Desmodur® N3300 und 56 µl Dibutylzinndilaurat und vernetzte dann 6 h bei 60 °C in einer Teflon-Gußform. Nach der Vernetzung und Entformung erhielt man eine gummielastische Folie. Diese Folie wurde 12 h in eine Lösung getaucht, die Styrol, Divinylbenzol (11 Gew.-%, bezogen auf Styrol) und Benzoylperoxid (0,5 Gew.-%, bezogen auf Styrol) enthielt. Die gummielastische Folie wurde zurück in die Gussform gelegt und im Ofen 2 h bei 80 °C und dann 2 h bei 100°C gehärtet. Man entfernte die Gussform aus dem Ofen und ließ abkühlen. Man erhielt eine durchscheinende flexible Folie, die etwa 70 Gew.-% Polyisobuten enthielt.

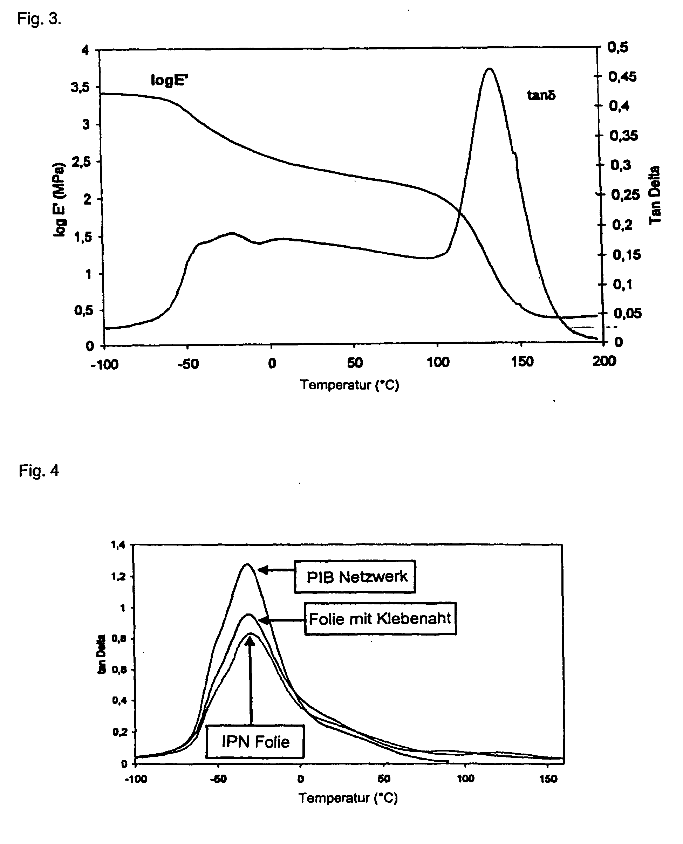

Die Ergebnisse der Dynamisch-mechanischen Analyse sind in Fig. 3 dargestellt.

### Beispiel 4

Man stellte eine Lösung her, indem man 2 g α,ω-Dihydroxypolyisobuten (Mn 4200), 220 mg Desmodur® N3300 und 56 µl Dibutylzinndilaurat mischte und in 1,1 g Dichlormethan aufnahm.

Aus Folien, die wie in Beispiel 2 hergestellt waren, wurden Streifen von 1 x 2 cm geschnitten. Zwei Streifen wurden auf einer Teflon-Unterlage mit den Schmalseiten so aneinander gelegt, dass dazwischen ein Abstand von etwa 0,3 mm verblieb. Die vorstehend hergestellte Lösung wurde im Spalt zwischen den Streifen und in einer Breite von jeweils 0,3 cm auf der angrenzenden Oberfläche der Streifen verteilt. Man ließ die Anordnung 12 h bei Raumtemperatur stehen. An den Auftragstellen der Lösung war die Dicke der Streifen 0,22 mm größer.

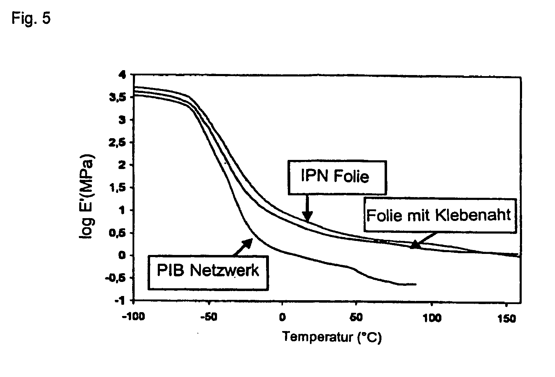

Die Ergebnisse der Dynamisch-mechanischen Analyse sind in den Fig. 4 und 5 dargestellt. Man kann erkennen, dass die geklebte Probe und die einstückige Probe sich weitgehend identisch verhalten. In einem weitern Versuch wurde die geklebte Probe zwei Tage in siedendes Wasser eingestellt und dann in einem Soxhlet-Extraktor mit siedendem Dichlormethan extrahiert. Es wurde keine Verschlechterung der mechanischen Festigkeit oder der Qualität der Klebeverbindung festgestellt.

### Beispiel 5

1 g α,ω-Dihydroxypolyisobuten (Mn 4200) wurde unter einer Argon-Schutzatmosphäre in 1,1 ml Styrol gelöst. Man versetzte das Gemisch mit 5 mg Benzoylperoxid (0,5 Gew.-%, bezogen auf Styrol), 110 mg Desmodur® N3300 und 28 µl Dibutylzinndilaurat und mischte gründlich. Das Gemisch wurde in eine Gussform überführt, die aus zwei Glasplatten bestand, die von einer Teflon-Dichtung mit einer Dicke von 0,5 mm auseinander gehalten wurden. Die Gussform wurde mit Kammern zusammengehalten und in einen Ofen mit Temperatursteuerung gestellt. Die Temperatur wurde 6 h auf 60 °C, dann 2 h auf 80 °C und schließlich 2 h bei 100°C gehalten. Man entnahm die Gussform aus dem Ofen, ließ abkühlen und entformte die Probe. Man erhielt eine weiße, flexible Folie.

### Beispiel 6

Auf ähnliche Weise wie in Beispiel 5 wurden interpenetrierende Netzwerke mit verschiedenen Gewichtsverhältnissen von PIB/Polystyrol-Phase hergestellt.

Die Ergebnisse der Dynamisch-mechanischen Analyse sind in der nachstehenden Tabelle zusammengefasst.

| PIB/PS Gewichtsverhältnis | Extrahierbare Anteile [Gew.-%]⁽¹⁾ | Tg₁⁽²⁾ | Tg₂ ⁽²⁾ | Speichermodul E' (MPa)⁽³⁾ |
|---|---|---|---|---|
| 100/0 | 0 | -31 | - | 0,8 |
| 50/50 | 22 | -28 | +122 | 2,1 |
| 40/60 | 26 | -21 | +127 | 12,2 |
| 20/80 | 44 | -18 | +123 | 50,8 |

| | | | | |
|---|---|---|---|---|
| ⁽¹⁾ 48-stündige Soxhlet-Extraktion in Dichlormethan ⁽²⁾ Tg wurde durch Dynamisch-mechanische Analyse am Maximum von tanδ bestimmt. ⁽³⁾ bei 25 °C | | | | |

### Beispiel 7

Man stellte ein Gemisch her, wie in Beispiel 1 beschrieben und füllte es in eine Spritze. Durch Drücken des Kolbens presste man einen zusammenhängenden viskosen Strang mit einem Durchmesser von etwa 0,8 mm aus, der durch eine Heizzone geführt wurde, in welcher die Temperatur zwischen Eintritt und Austritt des Stranges von Umgebungstemperatur auf 120 °C und zurück auf Umgebungstemperatur variierte. Nach dem Durchlaufen der Heizzone in etwa 5 min erhielt man ein durchscheinendes, flexibles faserförmiges Material.

### Beispiel 8

1 g α,ω-Dihydroxypolyisobuten (Mn 4200) wurde unter einer Argon-Schutzatmosphäre in 4 g Methylmethacrylat (MMA) und 120 µl Ethylenglycoldimethacrylat (3 Gew.-%, bezogen auf MMA) gelöst. Man versetzte das Gemisch mit 20 mg Benzoylperoxid (0,5 Gew.-%, bezogen auf MMA), 110 mg Desmodur® N3300 (Polyisocyanat von Bayer mit durchschnittlich 21,8 g Isocyanatgruppen /100g Produkt; 11 Gew.%, bezogen auf Polyisobuten) und 28 µl Dibutylzinndilaurat und mischte gründlich. Das Gemisch wurde in eine Gussform überführt, die aus zwei Glasplatten bestand, die von einer Teflon-Dichtung mit einer Dicke von 0,5 mm auseinander gehalten wurden. Die Gussform wurde mit Kammern zusammengehalten und in einen Ofen mit Temperatursteuerung gestellt. Die Temperatur wurde 6 h auf 60 °C, dann 1 h auf 80 °C gehalten. Man entnahm die Gussform aus dem Ofen, ließ abkühlen und entformte die Probe.

Auf ähnliche Weise wurden interpenetrierende Netzwerke mit verschiedenen Gewichtsverhältnissen von PIB/PMMA-Phase hergestellt.

Die Ergebnisse der Dynamisch-mechanischen Analyse sind in der nachstehenden Tabelle zusammengefasst.

| PIB/PMMA Gewichtsverhältnis | Tg₁⁽¹⁾ | Tg₂⁽¹⁾ | Speichermodul E'(MPa)⁽²⁾ | Tan δ⁽³⁾ |
|---|---|---|---|---|
| 100/0 | -29,6 | | 0,7 | 0,19 |
| 70/30 | -27,7 | 156 | 3,9 | 0,22 |
| 60/40 | -27,1 | 156 | 3,9 | 0,21 |
| 50/50 | -27,9 | 154 | 16,3 | 0,18 |
| 40/60 | -31,1 | 150 | 51,3 | 0,14 |
| 30/70 | -32,4 | 154 | 117,4 | 0,11 |
| 20/80 | -29,6 | 149 | 201,0 | 0,11 |
| 10/90 | -44,0 | 101 | 644,3 | 0,11 |
| 0/100 | | 125 | 2383,0 | 0,07 |

| | | | | |
|---|---|---|---|---|
| ⁽¹⁾ Tg wurde durch Dynamisch-mechanische Analyse am Maximum von tanδ bestimmt. ⁽²⁾ bei 25 °C ⁽³⁾ bei 25 °C | | | | |

### Beispiel 9

Man mischte 2 g α,ω-Dihydroxypolyisobuten (Mn 4200), 220 mg Desmodur® N3300 und 56 µl Dibutylzinndilaurat und vernetzte dann 6 h bei 60 °C in einer Teflon-Gußform. Nach der Vernetzung und Entformung erhielt man eine gummielastische Folie. Diese Folie wurde 12 h in eine Lösung getaucht, die MMA, Ethylenglycoldimethacrylat (3 Gew.%, bezogen auf MMA) und Benzoylperoxid (0,5 Gew.%, bezogen auf MMA) enthielt. Die gummielastische Folie wurde zurück in die Gussform gelegt und im Ofen 2 h bei 80 °C und dann 2 h bei 100 °C gehärtet. Man entfernte die Gussform aus dem Ofen und ließ abkühlen. Man erhielt eine durchscheinende flexible Folie, die etwa 30 Gew.-% PMMA und 70 Gew.-% Polyisobuten enthielt.

Bei der Dynamisch-mechanischen Analyse wurden in den tanδ-Kurven drei Übergänge bei -22 °C, +11 °C und +135 °C beobachtet. Die Übergänge bei -22 °C und +135 °C können den Bewegungen der PIB- und PMMA-Molekülketten zugeordnet werden. Der Übergang bei +11 °C scheint auf das Auftreten einer neuen PIB-reichen Phase hinzuweisen.

### Beispiel 10

0,4 g α,ω-Dihydroxypolyisobuten (Mn 4200) wurde unter einer Argon-Schutzatmosphäre in 1,6 ml Methylmethacrylat (MMA) gelöst. Man versetzte das Gemisch mit 8 mg Benzoylperoxid (0,5 Gew.%, bezogen auf MMA), 37 mg Desmodur® N3300, 1,1 µl Dibutylzinndilaurat und 300 µl Toluol und mischte gründlich. Das Gemisch wurde in eine Gussform überführt, die aus zwei Glasplatten bestand, die von einer Teflon-Dichtung mit einer Dicke von 0,5 mm auseinander gehalten wurden. Die Gussform wurde mit Kammern zusammengehalten und in einen Ofen mit Temperatursteuerung gestellt. Die Temperatur wurde 1 h auf 60 °C, dann 1 h auf 80 °C gehalten. Man entnahm die Gussform aus dem Ofen, ließ abkühlen und entformte die Probe. Man erhielt eine durchscheinende flexible Folie.

## Patentansprüche

1. Formmasse, enthaltend ein Gemisch interpenetrierender Polymere mit einer ersten Phase eines vernetzten Isobutenpolymers und einer zweiten Phase eines versteifenden Polymers, das (Meth)acryl- und/oder Vinylaromateneinheiten umfasst, wobei die erste Phase das Reaktionsprodukt eines Isobutenpolymers mit durchschnittlich wenigstens 1,4 funktionellen Gruppen im Molekül und eines Vernetzungsmittels mit durchschnittlich wenigstens zwei funktionellen Gruppen im Molekül, die komplementär funktionell zu den funktionellen Gruppen des Isobutenpolymers sind, umfasst.

2. Formmasse nach Anspruch 1, wobei das Gewichtsverhältnis der ersten Phase zur zweiten Phase 5:95 bis 80:20 beträgt.

3. Formmasse nach Anspruch 1 oder 2, wobei das Isobutenpolymer wenigstens 80 Gew.-% Isobuteneinheiten umfasst.

4. Formmasse nach einem der vorhergehenden Ansprüche, wobei die funktionellen Gruppen des Isobutenpolymers ausschließlich an den Molekülenden des Isobutenpolymers angeordnet sind.

5. Formmasse nach einem der vorhergehenden Ansprüche, wobei das Isobutenpolymer vor der Vernetzung ein zahlenmittleres Molekulargewicht von 500 bis 50000 aufweist.

6. Formmasse nach einem der vorhergehenden Ansprüche, wobei das Vernetzungsmittel durchschnittlich wenigstens 2,5 funktionelle Gruppen aufweist.

7. Formmasse nach einem der vorhergehenden Ansprüche, wobei die funktionellen Gruppen des Isobutenpolymers und des Vernetzungsmittels paarweise ausgewählt sind unter Hydroxyl-/Isocyanatgruppen oder olefinisch ungesättigten Gruppen/Hydrosilylgruppen.

8. Formmasse nach einem der vorhergehenden Ansprüche, wobei das versteifende Polymer Styrol- und/oder Methylmethacrylateinheiten umfasst.

9. Formmasse nach einem der vorhergehenden Ansprüche, wobei das versteifende Polymer Einheiten eines vernetzenden Monomers umfasst.

10. Formmasse nach Anspruch 8 oder 9, mit einem Gewichtsverhältnis der ersten Phase zur zweiten Phase von 5:95 bis 25:75 zur Verwendung als schlagzäh modifiziertes Polystyrol oder Polymethylmethacrylat.

11. Verfahren zur Herstellung einer Formasse nach Anspruch 1, bei dem man
(i) die Monomere, die das versteifende Polymer aufbauen, in Gegenwart der ersten Phase radikalisch polymerisiert oder
(ii) das Isobutenpolymer, das Vernetzungsmittel und die Monomere, die das versteifende Polymer aufbauen, mischt und gleichzeitig oder nacheinander die Umsetzung zwischen dem Isobutenpolymer und dem Vernetzungsmittel und die radikalische Polymerisation der Monomere initiiert.

12. Verwendung der Formmasse nach Anspruch 1 zur Herstellung von Werkstoffen oder Formteilen zur Bedachung von Gebäuden.

13. Verfahren zum Verbinden wenigstens zweier Formteile aus einer Formmasse nach Anspruch 1, bei dem man
(i) ein härtbares Gemisch aus einem im Anspruch 1 definierten Isobutenpolymer und einem im Anspruch 1 definierten Vernetzungsmittel herstellt,
(ii) das Gemisch mit den zu verbindenden Oberflächen der Formteile in Kontakt bringt, und
(iii) das Gemisch aushärten lässt.

## Claims

1. A molding composition, comprising a mixture of interpenetrating polymers with a first phase of a crosslinked isobutene polymer and with a second phase of a reinforcing polymer which comprises (meth)acrylic and/or vinylaromatic units, where the first phase comprises the reaction product of an isobutene polymer with an average of at least 1.4 functional groups in the molecule and of a crosslinking agent with an average of at least two functional groups in the molecule, the functionality of these being complementary to that of the functional groups of the isobutene polymer.

2. The molding composition according to claim 1, where the ratio by weight of the first phase to the second phase is from 5:95 to 80:20.

3. The molding composition according to claim 1 or 2, where the isobutene polymer comprises at least 80% by weight of isobutene units.

4. The molding composition according to any of the preceding claims, where the functional groups of the isobutene polymer have been arranged exclusively at the ends of the isobutene polymer molecule.

5. The molding composition according to any of the preceding claims, where the isobutene polymer has a number-average molecular weight of from 500 to 50 000 prior to the crosslinking process.

6. The molding composition according to any of the preceding claims, where the crosslinking agent has an average of at least 2.5 functional groups.

7. The molding composition according to any of the preceding claims, where the functional groups of the isobutene polymer and of the crosslinking agent have been selected in pairs from hydroxy/isocyanate groups or olefinically unsaturated groups/hydrosilyl groups.

8. The molding composition according to any of the preceding claims, where the reinforcing polymer comprises styrene units and/or methyl methacrylate units.

9. The molding composition according to any of the preceding claims, where the reinforcing polymer comprises units of a crosslinking monomer.

10. The molding composition according to claim 8 or 9, in which the ratio by weight of the first phase to the second phase is from 5:95 to 25:75, for use as impact-modified polystyrene or polymethyl methacrylate.

11. A process for preparing a molding composition according to claim 1, in which
(i) the monomers which form the structure of the reinforcing polymer are polymerized by a free-radical route in the presence of the first phase, or
(ii) the isobutene polymer, the crosslinking agent, and the monomers which form the structure of the reinforcing polymer are mixed, and the reaction between the isobutene polymer and the crosslinking agent and the free-radical polymerization of the monomers are initiated simultaneously or in succession.

12. The use of the molding composition according to claim 1 for producing materials or moldings for the roofing of buildings.

13. A process for the bonding of at least two moldings composed of a molding composition according to claim 1, in which
(i) a curable mixture composed of an isobutene polymer defined in claim 1 and of a crosslinking agent defined in claim 1 is prepared,
(ii) the mixture is brought into contact with those surfaces of the moldings that are to be bonded, and
(iii) the mixture is permitted to cure fully.

## Revendications

1. Masse de moulage, contenant un mélange de polymères interpénétrants présentant une première phase d'un polymère d'isobutène réticulé et une deuxième phase d'un polymère rigidifiant, qui comprend des unités de (méth)acryle et/ou d'aromatiques de vinyle, la première phase comprenant le produit de réaction d'un polymère d'isobutène avec en moyenne au moins 1,4 groupe fonctionnel dans la molécule et d'un réticulant comprenant en moyenne au moins deux groupes fonctionnels dans la molécule qui sont fonctionnellement complémentaires aux groupes fonctionnels du polymère d'isobutène.

2. Masse de moulage selon la revendication 1, le rapport pondéral de la première phase à la deuxième phase étant de 5:95 à 80:20.

3. Masse de moulage selon la revendication 1 ou 2, où le polymère d'isobutène comprend au moins 80% en poids d'unités d'isobutène.

4. Masse de moulage selon l'une quelconque des revendications précédentes, les groupes fonctionnels du polymère d'isobutène étant exclusivement disposés sur les extrémités des molécules du polymère d'isobutène.

5. Masse de moulage selon l'une quelconque des revendications précédentes, où le polymère d'isobutène présente, avant la réticulation, un poids moléculaire numérique moyen de 500 à 50 000.

6. Masse de moulage selon l'une quelconque des revendications précédentes, où le réticulant présente en moyenne au moins 2,5 groupes fonctionnels.

7. Masse de moulage selon l'une quelconque des revendications précédentes, où les groupes fonctionnels du polymère d'isobutène et le réticulant sont choisis par paire parmi les groupes hydroxyle/groupes isocyanate ou les groupes oléfiniquement insaturés/groupes hydrosilyle.

8. Masse de moulage selon l'une quelconque des revendications précédentes, où le polymère rigidifiant comprend des unités de styrène et/ou de méthacrylate de méthyle.

9. Masse de moulage selon l'une quelconque des revendications précédentes, où le polymère rigidifiant comprend des unités d'un monomère réticulant.

10. Masse de moulage selon la revendication 8 ou 9, présentant un rapport pondéral de la première phase à la deuxième phase de 5:95 à 25:75 destinée à être utilisée comme polystyrène ou poly(méthacrylate de méthyle) à résilience modifiée.

11. Procédé pour la préparation d'une masse de moulage selon la revendication 1, dans lequel
(i) on polymérise par voie radicalaire les monomères qui forment le polymère rigidifiant en présence de la première phase ou
(ii) on mélange le polymère d'isobutène, le réticulant et les monomères qui forment le polymère rigidifiant et on initie simultanément ou consécutivement la transformation entre le polymère d'isobutène et le réticulant et la polymérisation par voie radicalaire des monomères.

12. Utilisation de la masse de moulage selon la revendication 1 pour la préparation de matériaux ou de pièces moulées pour la couverture de bâtiments.

13. Procédé pour assembler au moins deux pièces moulées constituées par une masse de moulage selon la revendication 1, dans lequel
(i) on prépare un mélange durcissable d'un polymère d'isobutène défini dans la revendication 1 et d'un réticulant défini dans la revendication 1,
(ii) on met en contact le mélange avec les surfaces des pièces moulées à assembler, et
(iii) on laisse durcir le mélange.
